# EUROPEAN PATENT APPLICATION

(11) **EP 2 522 829 A2**
(43) Date of publication of application: **14.11.2012**
(21) Application number: 12166284.5
(22) Date of filing: 01.05.2012
(51) Int. Cl.: F02C 3/30

(54) **A steam injected gas turbine engine**

(30) Priority: 10.05.2011 GB 201107702
(71) Applicant: Rolls-Royce plc, London SW1E 6AT (GB)
(72) Inventor: Fletcher, Paul, Rugby, CV23 0LL (GB); Graham, Andrew Charles, Coventry, CV2 5JA (GB); Moran, John, Nuneaton, CV11 6NT (GB); Neeson, Christopher, Derby, DE22 3GU (GB); Hall, Terry, Derby, DE73 5AP (GB)
(74) Representative: Roberts, Nicholas John

(57) **Abstract**

A gas turbine engine (10) comprising a compressor (20), a combustion chamber (30) and a turbine (40) arranged in flow series, wherein the gas turbine engine further comprises: one or more combustion zones; a source of steam (60) configured to deliver steam to the combustion chamber; and a liquid water delivery system (100) configured to selectively provide liquid water to one or more of the combustion zones after a start up period of the gas turbine engine. A method of generating power with a gas turbine engine (10), the gas turbine engine comprising a compressor (20), a combustion chamber (30) and a turbine (40) arranged in flow series, wherein the method comprises: selectively delivering steam from a source of steam (60) to the combustion chamber; and providing liquid water to one or more combustion zones after a start up period of the gas turbine engine.

## Description

This invention relates to a gas turbine engine and particularly but not exclusively relates to a steam injected gas turbine engine with liquid water injected into a combustion zone.

### Background

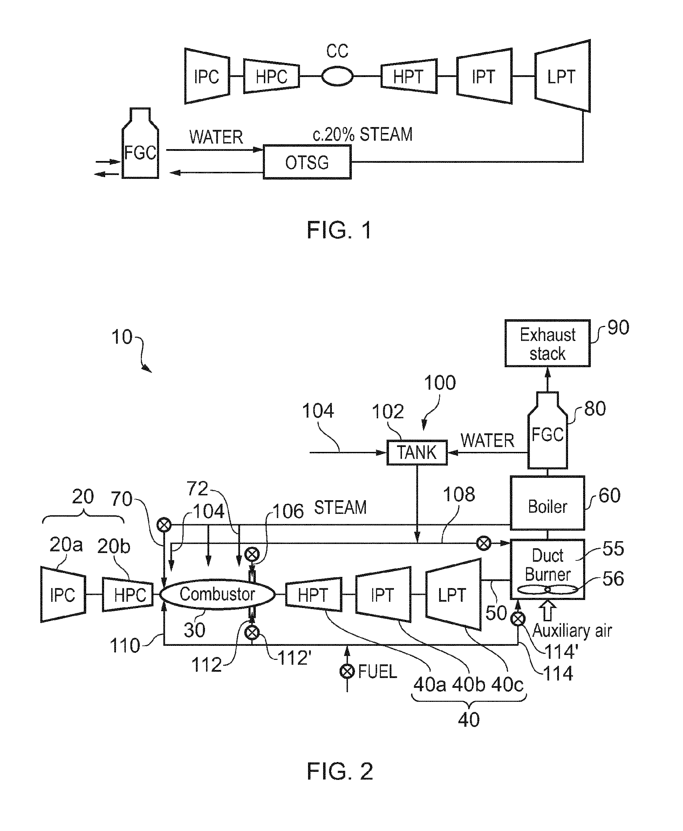

Gas turbine power plant types are typically configured as a simple cycle, combined cycle or an advanced cycle. A simple cycle gas turbine comprises a compressor, a combustion chamber and a turbine arranged in flow series. The combined and advanced cycles are distinguished from the simple cycle in that they incorporate water into the cycle. For example, the combined cycle comprises a separate steam cycle heated by the gas turbine exhaust via a heat recovery steam generator. By contrast, advanced cycles, for which there are many alternative configurations, typically combine the gas and water cycles by introducing water into the gas turbine engine. The water may be in the form of steam and an example of such an advanced cycle is shown in Figure 1.

As depicted in Figure 1, steam may be injected into the Combustion Chamber (CC) of a gas turbine engine. The advanced cycle gas turbine comprises an Intermediate Pressure Compressor (IPC), a High Pressure Compressor (HPC), a High Pressure Turbine (HPT), an Intermediate Pressure Turbine (IPT) and a Low Pressure Turbine (LPT) arranged in flow series in a conventional manner. The IPC and HPC are connected to the IPT and HPT via respective shafts, whereas the LPT may be connected to an electrical generator. The exhaust gases from the LPT are passed through a Heat Recovery Steam Generator (a modern form being a Once Through Steam Generator (OTSG)) and thereafter a Flue Gas Condenser (FGC). The OTSG heats up water which is then injected into the CC as steam.

To date, steam is most beneficially injected upstream of the HPT, since this maximises the increase in power generated by the increased mass flow through the HPT. However, to avoid major turbine modifications most steam injected gas turbine engines have only had limited steam flow to the combustor, and some injection downstream of the HP turbine. Furthermore, steam injected gas turbine engines have had limited performance due to conservative levels of combustion chamber firing temperature (e.g. the Cheng cycle 501 KH, or the Mashproekt Aquarius).

Combined cycles are attractive as they have a high cycle efficiency, typically in the range of 50% to 60% (the latter applying only at the very highest power levels, with complex steam cycles). By comparison, simple cycles are less efficient and with efficiencies typically in the range of 35-45% where 42% is typical for large aero-derivative gas turbines. On the other hand, simple cycles by their nature have a relatively low capital cost and have a small footprint. This contrasts with the more expensive combined cycles which require large heat recovery steam generators.

It is therefore hoped that advanced cycles may be able to combine the respective advantages of the simple and combined cycles, for example, by achieving a high efficiency with rapid response times and at low capital cost. For example, the efficiency of the advanced cycle shown in Figure 1 may be as high as 55% (with suitable turbine modifications and high firing temperature) without the complexity of a combined cycle.

However, low NOₓ emissions are also desirable and whilst these may be achieved either by water injected or pre mix, lean burn Dry Low Emissions' (DLE) combustion systems, these have been difficult to develop at high pressure ratios and are not proven with the high steam content needed for an efficient steam injected cycle.

In addition to the above, rapid start and response times are desirable in order to follow large fluctuations in the load requirement. In this respect, a simple cycle gas turbine is able to respond rapidly to load changes, including rapid start up. The latter is especially true for aero-derivative gas turbines with ten minutes being an industry standard rapid start time for such engines in the 40-100 MW class. By contrast, combined cycles are slow to respond and are not as quick at attaining their maximum efficiency on start up. For example, a 'once through' boiler, i.e. a boiler without the traditional separate drums for evaporation and superheating, can at best only increase pressure at a rate of 2 bar per minute. As a result, boiler start times are too long to achieve a 10 minute start.

To this end, it has been proposed that alternatives to steam could be used, e.g. during the start up phase or in a load following operation mode. Such alternatives may include 'chemical steam', e.g. from hydrogen peroxide. However, this is undesirable since it is notoriously hazardous and the large quantities required would not be economically or environmentally viable.

It is also desirable to maximise the power output for a given capital expenditure and it was found by the applicant that the steam injected gas turbine shown in Figure 1 was of too low a power to offer a competitive first cost of installation (i.e. $/kW). In addition, it is desirable to be able to operate in a load following mode for which rapid changes to the power output would be required.

The present invention therefore seeks to address these issues.

### Statements of Invention

According to a first aspect of the present invention there is provided a gas turbine engine comprising a compressor, a combustion chamber and a turbine arranged in flow series, wherein the gas turbine engine further comprises: one or more combustion zones; a source of steam configured to deliver steam to the combustion chamber; and a liquid water delivery system configured to selectively provide liquid water to one or more of the combustion zones after a start up period of the gas turbine engine.

The liquid water delivery system may be configured to vary the liquid water flow rate to the one or more combustion zones to match the power generated by the gas turbine engine to a varying load. The liquid water flow rate may be varied in conjunction with the fuel flow rate.

The liquid water delivery system may be configured to provide liquid water to one or more of the combustion zones during the start up period of the gas turbine engine.

The gas turbine engine may be configured to increase the combustion temperature during the start up period of the gas turbine engine with respect to the combustion temperature after the start up period. Additionally or alternatively, the gas turbine engine may be configured to increase the combustion temperature after the start up period of the gas turbine engine.

The source of steam may comprise a heat recovery steam generator, e.g. a once through steam generator, arranged to recover heat from the gas turbine engine exhaust.

The liquid water delivery system may be configured to deliver liquid water to a primary combustion zone in the combustion chamber. The liquid water delivery system may be configured to deliver liquid water to a secondary combustion zone, e.g. downstream of the primary combustion zone.

According to a second aspect of the present invention there is provided a method of generating power with a gas turbine engine, the gas turbine engine comprising a compressor, a combustion chamber and a turbine arranged in flow series, wherein the method comprises: delivering steam from a source of steam to the combustion chamber; and selectively providing liquid water to one or more combustion zones after a start up period of the gas turbine engine.

The method may further comprise varying the liquid water flow rate to the one or more combustion zones to match the power generated by the gas turbine engine to a varying load.

The method may further comprise increasing the combustion temperature during the start up period of the gas turbine engine with respect to the combustion temperature after the start up period. The combustion temperature may additionally or alternatively be increased after the start up period of the gas turbine engine.

The method may further comprise providing liquid water to one or more of the combustion zones during the start up period of the gas turbine engine.

Liquid water may be provided to a primary combustion zone in the combustion chamber. Liquid water may additionally or alternatively be provided to a secondary combustion zone.

The secondary combustion zone may be within the combustion chamber. The secondary combustion zone may be within a duct burner provided downstream of the turbine exhaust.

The gas turbine engine may further comprise one or more injectors configured to deliver one or more of fuel, steam and liquid water to the combustion zone. Individual injectors may be configured to deliver two or more of fuel, steam and liquid water to the combustion zone. For example: fuel and steam may be injected into the combustion zone from the same injector; fuel and liquid water may be injected into the combustion zone from the same injector; steam and liquid water may be injected into the combustion zone from the same injector; or fuel, steam and liquid water may be injected into the combustion zone from the same injector. Equally, the fuel, steam and liquid water may be injected into the combustion zone from different injectors.

### Brief Description of the Drawings

For a better understanding of the present invention, and to show more clearly how it may be carried into effect, reference will now be made, by way of example, to the accompanying drawings, in which:-
Figure 1 is a prior art arrangement for a steam injected gas turbine cycle; and
Figure 2 shows an example of a steam injected gas turbine cycle according to the present invention.

### Detailed Description

With reference to Figure 2, a gas turbine cycle 10, according to an example of the present invention, may comprise a compressor 20, a combustion chamber 30 and a turbine 40. The compressor 20, combustion chamber 30 and turbine 40 are arranged in flow series with the compressor 20 and turbine 40 rotatably connected to one another via one or more shafts so that the turbine may drive the compressor. Any excess power generated by the turbine 40 may be transferred to an electrical generator (not shown). The gas turbine cycle 10 may comprise an aero-derivative gas turbine engine.

The compressor 20 may comprise one or more compressor sections. For example, the compressor may comprise one or more of an Intermediate Pressure Compressor (IPC) 20a and a High Pressure Compressor (HPC) 20b. Although not shown, the compressor 20 may also optionally comprise a Low Pressure Compressor (LPC).

The turbine 40 may equally comprise one or more turbine sections. For example, the turbine may comprise one or more of a High Pressure Turbine (HPT) 40a, an Intermediate Pressure Turbine (IPT) 40b and a Low Pressure Turbine (LPT) 40c.

Each turbine section may be connected to a different shaft. For example, the IPC 20a and HPC 20b may be rotatably connected to the IPT 40b and HPT 40a respectively by respective shafts (not shown). By contrast, the LPT 40c may be connected to an electrical generator via a separate shaft. The LPT 40c may also be rotatably connected to the LPC if it is included. One or both of the Intermediate Pressure or High Pressure Turbines and Compressors may be omitted such that the gas turbine may be a three, two or single spool engine.

The exhaust gases from the LPT 40c may be passed via a duct 50 into a boiler 60. The boiler 60 may comprise a Heat Recovery Steam Generator (HRSG) or a Once Through Steam Generator (OTSG), which is a HRSG without boiler drums. The boiler is in effect a heat exchanger which may transfer heat from the exhaust gases from the LPT to liquid water. As a result, the boiler 60 may heat up water to beyond its boiling point such that the boiler is a source of steam. The steam may then be injected into a primary combustion zone within the combustion chamber 30 of the gas turbine engine via a duct 70. The gas turbine cycle 10 is thus an example of an advanced cycle and may be referred to as a steam injected cycle.

The steam from the boiler may additionally or alternatively be injected into a secondary combustion zone within the combustion chamber 30 via a duct 72. The secondary combustion zone within the combustion chamber 30 may be downstream of the primary combustion zone. The combustion chamber 30 may comprise one or more secondary injectors (not shown), which may provide fuel and steam to the secondary combustion zone. Likewise, the combustion chamber 30 may comprise one or more primary injectors (not shown), which may provide fuel and steam to the primary combustion zone. However, separate injectors may be used to inject the fuel and steam into the primary and secondary combustion zones.

A duct burner 55 may be provided between the LPT 40c exhaust and the boiler 60. The duct burner 55 may be used during the start phase in order to rapidly heat the boiler 60 and generate steam more quickly. The duct burner may also serve to burn out any carbon monoxide (CO) produced by the engine during water injected operation. The duct burner 55 may employ an auxiliary fan 56 to feed the duct burner with air, for example during the initial start phase. The secondary combustion zone may be within the duct burner. As a result, the gas turbine engine may comprise secondary combustion zones in the combustion chamber 30 and/or the duct burner 55.

Fuel may be provided to the primary and secondary combustion zones within the combustion chamber by ducts 110, 112 respectively. Fuel may also be provided to one or more duct burner injectors (not shown) via duct 114. Ducts 112, 114 may comprise valves 112', 114' for selectively controll ing the flow of fuel to the secondary combustion zones.

Downstream of the boiler 60 the exhaust gases may also pass through a Flue Gas Condenser (FGC) 80 and they may also be drawn into an exhaust stack 90 or a cooling tower in order to provide a low temperature heat sink to the cycle and maximise the cycle efficiency and /or water recovery rate.

The gas turbine engine 10 may further comprise a liquid water delivery system 100 configured to selectively provide liquid water to one or more of the combustion zones. In particular, the liquid water delivery system 100 may provide liquid water to the combustion zones after a start up period of the gas turbine engine, e.g. during a steady state mode of operation. In other words a liquid water flow through the combustion injectors may be provided during normal operation of the gas turbine. The liquid water delivery system may also be configured to provide liquid water to one or more of the combustion zones during the start up period of the gas turbine engine. The flow rate of the liquid water may be varied or it may be maintained at an approximately constant value. By way of example, the liquid water delivery system may be configured to vary the liquid water flow rate to the one or more combustion zones, e.g. in conjunction with varying the fuel flow, to match the power generated by the gas turbine engine to a varying load.

The water may be recovered, e.g. by the FGC 80, and fed into a tank 102. The recovery of the water may avoid or at least minimise environmental concerns, particularly if continuous operation is required. Nevertheless, water may be supplied to the tank form an external source via duct 104. Liquid water may then be supplied from the tank 102 to injectors adjacent to the combustion zones. For example, ducts 104, 106 may deliver liquid water to the primary and secondary combustion zones in the combustion chamber 30 respectively. Similarly, a duct 108 may deliver liquid water to the secondary combustion zone in the duct burner 55. Each of the ducts 104, 106, 108 may comprise valves for selectively controlling the flow of liquid water to the respective combustion zone.

The primary and/or secondary injectors of the combustion chamber 30 may be adapted to also inject liquid water into the respective combustion zones. Equally, the duct burner injectors may be adapted to also inject liquid water into the secondary combustion zones within the duct burner. However, separate injectors from the fuel and/or steam injectors may be used to deliver the liquid water. For example, fuel and steam may be injected into a combustion zone (e.g. primary or secondary) from a first injector, whilst liquid water may be injected into the combustion zone from a separate second injector. Equally, fuel may be injected into the combustion zone from the first injector, whilst liquid water and steam may be injected into the combustion zone from the second injector. (Fuel and liquid water may also be injected from a single injector with steam being injected from a separate injector.) Alternatively, fuel, steam and liquid water may be injected into the combustion zone from a single injector or separate injectors may be provided for each of fuel, steam and liquid water. The injectors may atomise the liquid water into droplets which may be a size to readily evaporate.

By injecting liquid water into the combustion zones, the power output may be increased due to the increase in the mass-flow through the turbine 40. (The injection of steam into the combustor 30 also increases the mass flow through the turbine and hence the power generated by the turbine 40 and gas turbine engine 10.) Although having to heat up the liquid water in the combustion zone may have a detrimental effect on the overall efficiency of the cycle, the power output may be increased rapidly since the liquid water is readily available. For example, when operating in a fast starting or load following mode it may be desirable to quickly increase the power output, albeit with a small efficiency sacrifice. In any event, the injection of liquid water into the combustion zone may also reduce the NOₓ emissions since the temperature in the combustion zone may be lowered. The present invention may thus make the best use of liquid water supplied to a steam injected engine both for fast starting and during operation at power.

The ratio of liquid water mass-flow rate to fuel mass-flow rate may be limited to approximately 1.4 due to incomplete combustion above this ratio causing CO emissions. The ratio of liquid water mass-flow rate to fuel mass-flow rate may preferably be approximately 1.0 in order to avoid CO emissions and also restrict a reduction in the efficiency.

In addition to the above, the gas turbine engine may be configured to increase the combustion temperature during the start up period of the gas turbine engine. In other words, a higher firing temperature may be used during the start phase than for normal operation. This may serve to increase the rate at which steam is produced in the boiler and thus reduce the duration of the start phase. The start phase could alternatively involve operating at a lower firing temperature, e.g. to ensure low NOₓ emissions. A higher liquid water flow rate may also be used during the start phase to increase the power output, albeit at a lower efficiency.

The present invention relates to a steam injected engine with higher power, lower NOₓ emissions and simple gas turbine configuration. This is enabled by the injection of liquid water into the combustion zones, which in turn reduces the combustion temperature and increases the mass-flow through the turbine. As a result, the present invention provides a configuration with a higher power output without a significant increase in the capital cost. As such, the present invention offers excellent performance and economics whilst retaining a simple engine layout.

The gas turbine cycle of the present invention may be used in applications other than electrical power generation, for example, propulsion, liquefied natural gas production, marine applications or any other application.

## Claims

1. A gas turbine engine comprising a compressor, a combustion chamber and a turbine arranged in flow series, wherein the gas turbine engine further comprises:
one or more combustion zones;
a source of steam configured to deliver steam to the combustion chamber; and
a liquid water delivery system configured to selectively provide liquid water to one or more of the combustion zones after a start up period of the gas turbine engine.

2. The gas turbine engine of claim 1, wherein the liquid water delivery system is configured to vary the liquid water flow rate to the one or more combustion zones to match the power generated by the gas turbine engine to a varying load.

3. The gas turbine engine of claim 1, wherein the liquid water delivery system is configured to provide liquid water to one or more of the combustion zones during the start up period of the gas turbine engine.

4. The steam injected gas turbine engine claim 1, wherein the gas turbine engine is configured to increase the combustion temperature during the start up period of the gas turbine engine with respect to the combustion temperature after the start up period.

5. The gas turbine engine claim 1, wherein the source of steam comprises a heat recovery steam generator arranged to recover heat from the gas turbine engine exhaust.

6. The gas turbine engine of claim 1, wherein the liquid water delivery system is configured to deliver liquid water to a primary combustion zone in the combustion chamber.

7. The gas turbine engine of claim 1, wherein the liquid water delivery system is configured to deliver liquid water to a secondary combustion zone.

8. A method of generating power with a gas turbine engine, the gas turbine engine comprising a compressor, a combustion chamber and a turbine arranged in flow series, wherein the method comprises:
delivering steam from a source of steam to the combustion chamber; and
selectively providing liquid water to one or more combustion zones after a start up period of the gas turbine engine.

9. The method of claim 8, wherein the method further comprises varying the liquid water flow rate to the one or more combustion zones to match the power generated by the gas turbine engine to a varying load.

10. The method of claim 8, wherein the method further comprises:
providing liquid water to one or more of the combustion zones during the start up period of the gas turbine engine.

11. The method of claims 8, wherein the method further comprises:
increasing the combustion temperature during the start up period of the gas turbine engine with respect to the combustion temperature after the start up period.

12. The method of claims 8, wherein the method further comprises:
providing liquid water to a primary combustion zone in the combustion chamber.

13. The method of claims 8, wherein the method further comprises:
providing liquid water to a secondary combustion zone.

14. The gas turbine engine of claim 7 or the method of claim 13, wherein the secondary combustion zone is within the combustion chamber or a duct burner provided downstream of the turbine exhaust.

15. The gas turbine engine of claim 1 or the method of claim 8, wherein the gas turbine engine further comprises one or more injectors and the injectors are configured to deliver two or more of fuel, steam and liquid water to the combustion zone from the same injector.
